# EUROPEAN PATENT SPECIFICATION

(11) **EP 0 750 107 B1**
(45) Date of publication and mention of the grant of the patent: **27.10.1999**
(21) Application number: 95850114.0
(22) Date of filing: 21.06.1995
(51) Int. Cl.: F02K 1/80, F02K 1/82

(54) **Exhaust nozzle flap**
Klappe für eine Schubdüse
Volet pour une tuyère de propulsion

(43) Date of publication of application: 27.12.1996
(73) Proprietor: Volvo Aero Corporation, 46181 Trollhättan (SE)
(72) Inventor: Lundberg, Robert, S-461 59 Trollhättan (SE)
(74) Representative: Delmar, John-Ake

(56) References cited:
- EP-A- 0 387 123
- EP-A- 0 623 742
- FR-A- 1 198 723
- FR-A- 2 657 119
- GB-A- 643 696
- US-A- 2 544 538
- US-A- 3 612 400

## Description

The present invention refers to a hingedly and adjustably suspended flap-like area segment for the formation together with further segments in circumferential relationship of the wall of a variable geometry exhaust nozzle for turbojet engine after-burners, said segment comprising ceramic material.

In order to increase the thrust and efficiency of turbojet engines certain types thereof are equipped with an afterburner or augmentor which preferably is provided with an exhaust nozzle with variable cross-sectional area. The peripheral wall of such an outlet nozzle comprises a first set of flap-like segments in a convergent portion of the nozzle in order to reduce the area thereof and a further set of segments or flaps in a diverging portion of the nozzle for increasing the area thereof. In both cases the peripheral wall is formed of circumferentially alternately arranged area or surface segments and intermediate seal segments movably suspended and adjustable by means of pressure-cylinder-operated linkage systems or the like.

In nozzles with variable geometry and particularly in such nozzles for directional variation of the whole exhaust flow, known as thrust vectoring nozzles, said flaps or segments are intensively heated. The position of the segments within the engine makes it difficult, however, to cool them. It has been suggested to cool the segments by means of e.g. film cooling but it is technically complicated to carry cooling air to said portion of the afterburner nozzle. Improvements of the efficiency of the afterburner also causes that an ever-decreasing amount of cooling air is available for the cooling of the flaps or segments.

In afterburners having thrust vectoring nozzles the segments furthermore are subjected to very large forces since by means of said segments the deflection of the exhaust jet at an angle to the longitudinal axis of the engine is provided.

Therefore, conventional nozzle flaps or segments have been made of metal, often having a plasma-sprayed heat protection coating of a ceramic material such as ZrO₂ at its surface facing the hot side. The metal provides the necessary mechanical strength of the flap or segment and provides for a hinged mounting thereof to the nozzle wall, while the ceramic material provides the necessary heat resistance. Due to the insufficient thermal protection action of the ZrO₂ coating it has turned out, however, to be difficult to obtain a sufficient service life of such flaps or segments.

It has also been suggested to attach plates of ceramic material to metal supports by means of rivets, bolts or similar fastening means, also of metal. Said fastening means, however, penetrate the ceramic plate to the hot side thereof and thereby the plate and hence the segment exhibits a short service life.

From US-A 4,637,550 is known a nozzle segment which also is composed of two different materials, namely a bottom part or plate of a heat-resistant ceramic material and a support member of high-strength metal. For accomodating the differences in thermal expansion coefficient of the associated materials the very plate has been given a very complicated shape with strengthening ridges and back-folded portions of the material. The plate and hence the flap thereby becomes very expensive and difficult to manufacture since it is difficult to form articles of ceramic material and particularly of ceramic fibers having folds over angles greater than 90°. It is also very difficult to carry out a finishing machining of articles of ceramic materials since they are extremely hard.

Usually, the composite materials utilized in nozzle flaps or segments in turbojet engines are manufactured by the steps of stacking and forming ceramic fiber fabric into a pre-form in a mold. Thereafter, the matrix is added as a ceramic powder slurry, a pre-ceramic polymer precursor or as gaseous reactants. The matrix or the matrix precursor then fills the cavities in the pre-formed stacked fiber fabrics. Thereafter, the composite material may be further densified by utilizing increased pressures (uniaxial hot pressing or hot isostatic pressing) or by precursor pyrolysis followed by further addition of precursor and pyrolysis.

When utilizing said kind of manufacturing technique planar shapes of uniform thickness, i.e. panels, are easiest to manufacture. Forms other than the planar shape can be manufactured as long as it is possible to form the ceramic fiber fabrics into said shape, i.e. slightly curved panels.

The object of the invention now is to provide a hingedly and adjustably suspended flap-like area segment for turbojet engine afterburners which is easy and simple to manufacture and which has a non-complicated structure and requires a minimum of finishing and the surface of which facing the engine exhaust flow is entirely free of metal. In accordance with the present invention this is obtained in that said segment consists of at least two mutally adjacent elongated planar or slightly curved panels exclusively of ceramic material and having an edge portion bent in not more than 90° toward the "cold" side of the segment along at least the longitudinal side facing the adjacent panel, by means of which portions the panels are mutually joined together for forming said segment under the intermediation of metal elements, preferably of U-shape and gripping over adjacent pairs of bent portions of the respective panel pairs, at least some of said metal elements having holes for accomodating hinge shafts and/or actuation means such that on each segment a continuous ceramic surface entirely free of metal faces the hot exhaust gas flow from the engine.

The main advantage of the inventive segment is that the strength thereof thus obtained is sufficient for accomodating the forces met during the use, substantially pressure forces, without any need of supplementary strengthening measures. The segments are easy to manufacture by holding fiber fabrics or fiber preforms in a mold during matrix infiltration.

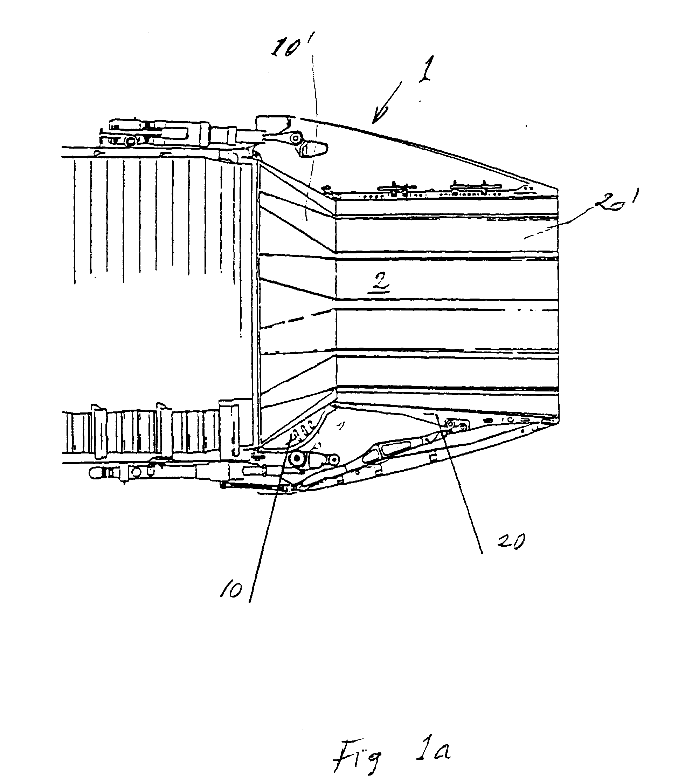

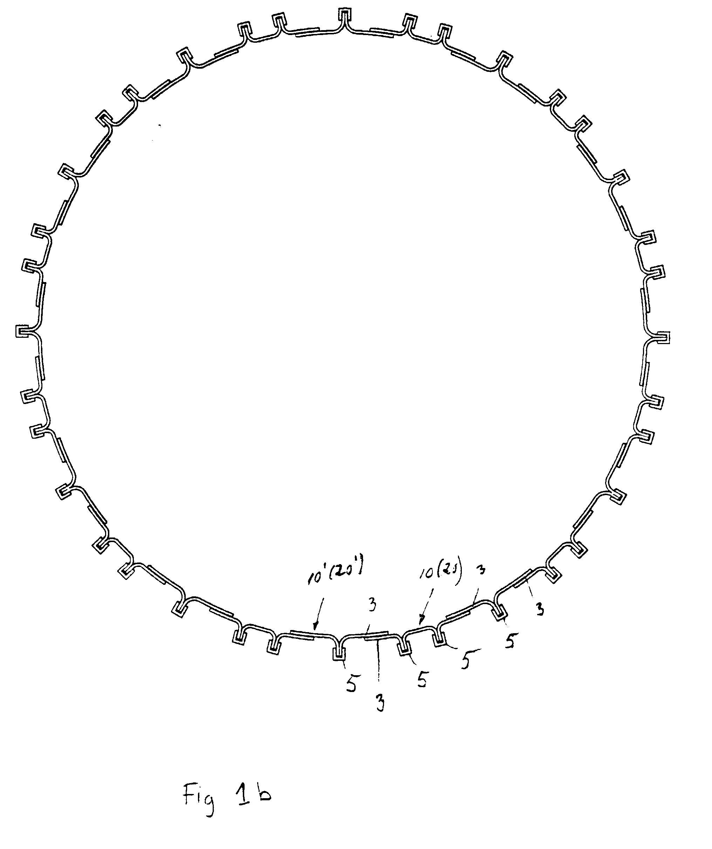

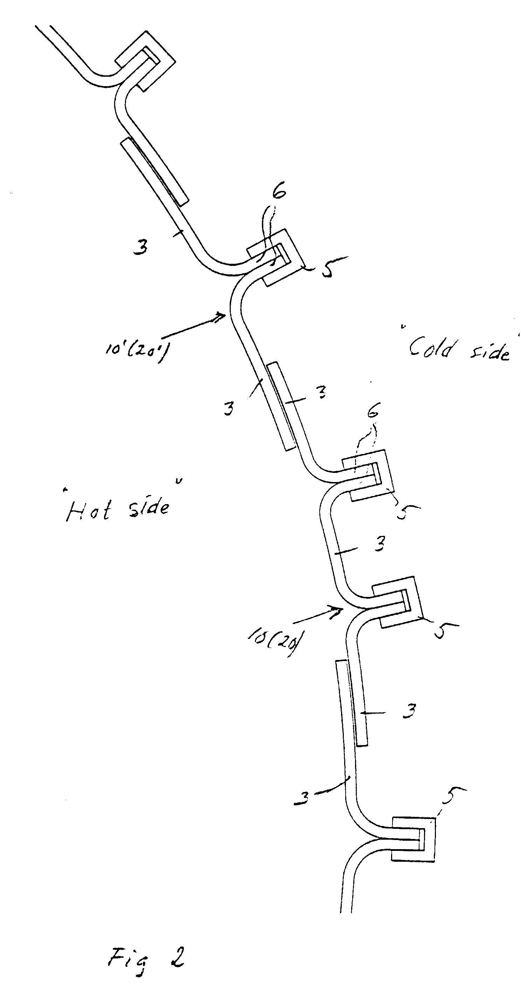

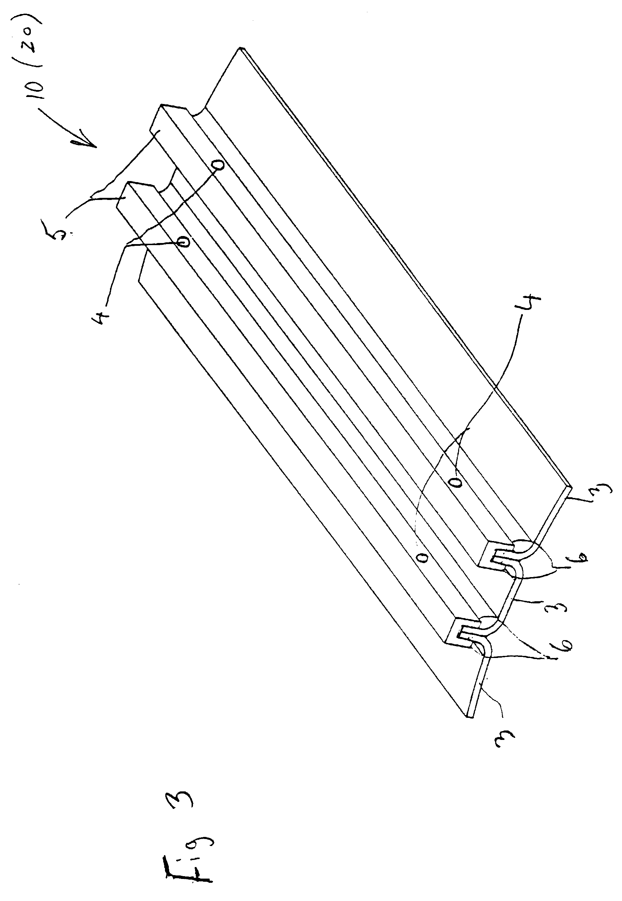

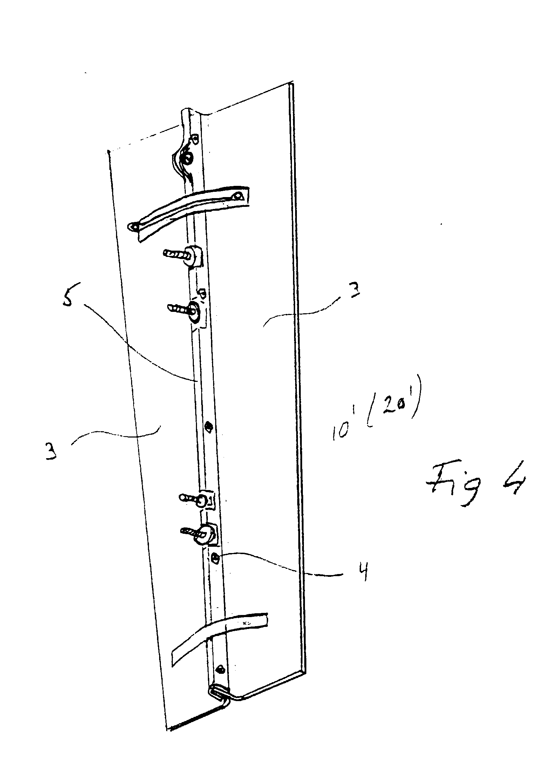

By way of example, the invention will be further described below with reference to the accompanying drawing, in which Fig. 1a is a diagrammatic longitudinal section and Fig. 1b an end view of the afterburner portion of a turbojet engine with an outlet in the form of a nozzle of variable cross-sectional area, Fig. 2 is an end view of the nozzle wall surface segment arrangement similar to Fig. 1b but to an enlarged scale, Fig. 3 is a perspective view of a flap-like nozzle wall surface segment made according to the invention, which together with a plurality of similar segments in a circumferential relationship and with intermediary seal segments form the peripheral wall of the nozzle, and Fig. 4 illustrates a seal segment with a shape diverging in the gas flow direction.

In the drawing it is thus diagramatically illustrated the afterburner portion 1 of a turbojet engine not further illustrated. The outlet of said portion 1 has the form of a nozzle 2 with variable cross-sectional area. In order to provide for said area variation the peripheral wall of the nozzle is formed of two sets of flap-like surface segments 10 and 20 arranged axially after each other and circumferentially distributed around the longitudinal axis of the engine and each being hingedly suspended at its upstream end, in the first set from the engine or afterburner wall and in the other set from the downstream end of the respective segment of the first set upstream thereof. Slots or openings between the segments 10, 20 which might form during area variations are covered by suitable seal segments 10', 20' radially inwardly thereof and of similar form as the surface segments.

As is evident from Figs. 2-4 a segment 10, 20 according to the invention is composed of at least two elongated planar or slightly curved panels 3 entirely of ceramic material. Said panels 3 are provided with a bent edge 6 directed at an angle of not more than about 90° to the rear or "cold" side of the segment along at least one of the longitudinal sides thereof. When joining the panels 3 in order to form the segment 10, 20, one or more metal pieces or securing means 5 are pushed over mutually engaging edges 6 of adjacent panels 3. The securing means 5 preferably are made of sheet metal and suitably have U-shape and penetrating holes 4 are made in at least some of said securing means 5 as well as through the edges 6 of the panels 3 lying therewithin in alignment with the holes in securing means 5 for accomodation of required suspension shafts, joining means and/or actuation means (not illustrated).

Owing thereto the continuous ceramic surface facing the hot exhaust flow of the engine is entirely free of metal and thus a very resistant segment with long service life and of low weight is obtained. Although in the above-stated only the surface segments have been decribed in details, the same conditions also apply as far as the intermediary seal segments 10', 20' are concerned.

To form the panels either as illustrated in Fig. 3 or in Fig. 4 is very advantageous from a manufacturing point of view since the fibers in the ceramic material do not need to be bent more than 90° and the finished panel requires just a minimum of finishing machining.

In Fig. 3 is illustrated a finished flap or segment consisting of three joined panels 3, over the bent edges 6 of which metal securing means 5 have been mounted. Said shape of the segment provides a very torsional-stiff structure which does not need a supporting backing as is the case in prior flaps of ceramic materials. Compared to conventional flaps of metal having a ceramic heat-protective coating it can thus be obtained a weight saving of about 40%. Ceramic materials which can be utilized in the segment according to the invention usually are fibers and matrix of carbon, silicon carbide, silicon nitride, aluminium oxide, zirkonium oxide or other refractory oxides, carbides or borides. As examples of materials which have been tested in this application are SiC_{f}/SiC, SiC-coated C_{f}/C, SiC_{f}/Al₂O₃, SiC_{f}/Si₃N₄ in which _{f} denotes fiber.

Flaps or segments of ceramic material preferably are manufactured in a known way by stacking of fiber fabrics or weaves in a clamp or mold. The matrix is then infiltrated as a ceramic powder slurry, as a preceramic polymer precursor or as gaseous reactants. The matrix or matrix precursor fills the pores in the fiber preform made of stacked fabrics. The infiltrated composite can be further densified by use of elevated pressures (uniaxial hot pressing or hot isostatic pressing) or by precursor pyrolysis followed by further precursor infiltrations and pyrolyses. With this kind of manufacturing technique flat shapes with a uniform thickness are easiest to manufacture. Shapes slightly differing from a planar form can be made as long as it is possible to drape the ceramic fiber weaves to that shape (i.e. slightly curved panels).

The inventive embodiment of the surface segments thus also might be used in the manufacture of the seal segments 10', 20', which are located on the hot side of the surface segments 10, 20 in order to bridge the slots or openings forming therebetween during the adjusting movements thereof.

In Fig. 4 is illustrated an example of a seal segment 20' having a diverging shape in the direction of the gas flow. The upwardly bent edges 6 of two mutually adjacent panels 3 are joined by means of a continuous U-profile of sheet metal with mounting points secured thereto for actuating rods etc. Of course the seal segments 10' might be formed in the same manner but then shaped convergent in the gas flow direction.

## Claims

1. A hingedly and adjustably suspended flap-like area segment for the formation together with further segments in circumferential relationship of the wall of a variable geometry exhaust nozzle for turbojet engine afterburners, said segment comprising ceramic material, **characterized in that** said segment (10,20;10',20') consists of at least two mutally adjacent elongated planar or slightly curved panels (3) exclusively of ceramic material and having an edge portion (6) bent in not more than 90° towards the "cold" side of the segment along at least the longitudinal side facing the adjacent panel, by means of which portions (6) the panels (3) are mutually joined together for forming said segment under the intermediation of metal elements (5), preferably of U-shape and gripping over adjacent pairs of bent portions (6) of the respective panel pairs, at least some of said metal elements and the respective edge portions therein having holes (4) for accomodating hinge shafts and/or actuation means such that on each segment a continuous ceramic surface entirely free of metal faces the hot exhaust gas flow from the engine.

## Patentansprüche

1. Gelenkig und verstellbar aufgehängtes klappenartiges Flächensegment für die Bildung, zusammen mit weiteren Segmenten in Umfangsbeziehung, der Wand einer Schubdüse mit veränderlicher Geometrie für Turbostrahltriebwerk-Nachbrenner, wobei das Segment ein Keramikmaterial umfaßt, dadurch gekennzeichnet, daß das Segment (10, 20; 10', 20') aus mindestens zwei zueinander benachbarten, langgestreckten, planaren oder leicht gekrümmten Platten (3) besteht, die ausschließlich aus Keramikmaterial bestehen und einen Kantenteil (6) aufweisen, der in nicht mehr als 90° zur "kalten" Seite des Segments entlang zumindest der Längsseite, die der benachbarten Platte zugewandt ist, gebogen ist, durch welche Teile (6) die Platten (3) gegenseitig aneinandergefügt sind, um das Segment unter der Zwischenschaltung von Metallelementen (5), vorzugsweise mit U-Form, die über benachbarte Paare von gebogenen Teilen (6) der jeweiligen Plattenpaare greifen, auszubilden, wobei zumindest einige der Metallelemente und der jeweiligen Kantenteile darin Löcher (4) zum Aufnehmen von Gelenkwellen und/oder Betätigungsvorrichtungen aufweisen, so daß an jedem Segment eine durchgehende Keramikoberfläche, die vollständig frei von Metall ist, dem heißen Abgasstrom aus dem Motor zugewandt ist.

## Revendications

1. Segment de zone en forme de volet suspendu de manière articulée et ajustable pour la formation, avec des segments supplémentaires en relation circonférentielle, de la paroi d'une buse d'échappement à géométrie variable pour des chambres de postcombustion de turboréacteurs, le segment comportant un matériau céramique, caractérisé en ce que le segment (10, 20 ; 10', 20') est constitué d'au moins deux panneaux (3) incurvés légèrement ou plans oblongs mutuellement adjacents exclusivement en un matériau céramique et ayant une partie (6) de bord courbée pas plus de 90° en direction du côté "froid" du segment le long au moins du côté longitudinal faisant face au panneau adjacent, parties (6) au moyen desquelles les panneaux (3) sont mutuellement réunis pour former le segment avec interposition d'éléments (5) métalliques, de préférence en forme de U et en prise sur des paires adjacentes de parties (6) courbées des paires respectives de panneaux, au moins certains des éléments métalliques et les parties de bord respectives qui s'y trouvent ayant des trous (4) pour recevoir des arbres d'articulation et/ou des moyens d'actionnement de sorte que sur chaque segment une surface continue en céramique entièrement sans métal soit en face de l'écoulement de gaz d'échappement chaud du moteur.
